# EUROPÄISCHE PATENTSCHRIFT

(11) **EP 2 158 453 B1**
(45) Veröffentlichungstag und Bekanntmachung des Hinweises auf die Patenterteilung: **12.07.2017**
(21) Anmeldenummer: 08758654.1
(22) Anmeldetag: 20.05.2008
(51) Int. Cl.: G01D 5/245, G01D 5/14

(54) **ANORDNUNG ZUR ABTASTUNG EINES LINEAREN ODER KREISFÖRMIGEN MASSSTABES AUS FERROMAGNETISCHEM MATERIAL**
ARRANGEMENT FOR SCANNING A LINEAR OR CIRCULAR MEASURING ROD MADE OF FERROMAGNETIC MATERIAL
DISPOSITIF DE BALAYAGE D'UNE ÉCHELLE LINÉAIRE OU CIRCULAIRE EN UN MATÉRIAU FERROMAGNÉTIQUE

(30) Priorität: 21.05.2007 DE 102007023815
(43) Veröffentlichungstag der Anmeldung: 03.03.2010
(73) Patentinhaber: Sensitec GmbH, 36633 Lahnau (DE)
(72) Erfinder: LOREIT, Uwe, 35580 Wetzlar (DE); TRAUTE, Jörg, 35043 Marburg (DE); SCHMITT, Jochen, 35216 Biedenkopf (DE)
(74) Vertreter: Schubert, Siegmar
(86) Internationale Anmeldenummer: PCT/EP2008/004047
(87) Internationale Veröffentlichungsnummer: WO 2008/141804

(56) Entgegenhaltungen:
- WO-A-2005/088259
- JP-A- 58 015 113
- US-A1- 2004 095 130

## Beschreibung

Die Anordnung betrifft eine Sensoranordnung mit einem linearen oder kreisförmigen Maßstab aus ferromagnetischem Material nach dem Oberbegriff des Anspruchs 1. Solche Anordnungen sind beispielsweise in der Feinmechanik, im Maschinenbau oder im Automobilbau anwendbar.

Ausführungen derartiger Sensoranordnungen sind seit langem bekannt. So wird in der DE 31 22 376 eine Vorrichtung zur Erfassung der Drehzahl von rotierenden Teilen beschreiben, bei der das rotierende Teil ein weichmagnetisches Zahnrad ist, Dauermagnete zur Erzeugung eins Magnetfeldes eingesetzt werden und die Änderung des Magnetfeldes, wenn ein Zahn den Magneten passiert, durch Hall-Sensoren oder magnetoresistive Sensoren detektiert wird. Für die ausschließliche Ermittlung der Drehzahl ist die angegebene Anordnung in ihrer Einfachheit und Effektivität kaum zu übertreffen. Anders stellt sich die Sache dar, wenn dieselbe Anordnung auch zur genauen Bestimmung des jeweiligen Drehwinkels des Zahnrades zu jedem beliebigen Zeitpunkt benutzt werden soll und wenn der Drehwinkelwert auch in einer maschineninternen Umwelt mit nicht vermeidbaren Streumagnetfeldern mit hoher Genauigkeit zur Verfügung stehen muss. Bei der genannten Erfindung wird der Magnet mit seiner magnetischen Achse, die beide parallele Polflächen verbindet, radial zur Zahnradachse positioniert. Zwischen der dem Zahnrad näher liegenden Polfläche und der Zahnoberfläche befindet sich der jeweilige magnetische Sensor. Seine Abmessungen sind gering im Verglich mit der der Polfläche, in deren Mitte der Sensor positioniert ist. Diese beiden Eigenheiten der Anordnung verhindern, dass eine möglichst hohe magnetische Feldstärke an den Zähnen und am Sensorort erreicht wird. Sie würde ansteigen, wenn der Abstand zwischen Zahn und Magnet geringer wäre und der Sensor sich näher an einem Rand der Polfläche befinden würde. Ersteres wird durch den Sensor verhindert, das zweite führt wegen der am Rand der Polfläche inhomogenen Feldverteilung zu einem starken Sensoroffset. Der dadurch bedingte Messfehler wäre bei der so geänderten Anordnung größer als der Genauigkeitsgewinn durch die erhöhte Feldstärke.

Eine ganze Reihe von Anordnungen, die in den Patenten US 5,444,370; US 4,859,941, US 4,745,363; US 5,841,276 und US 4,626,781 beschrieben sind, benutzen die angegebene Richtung des Feldes des Dauermagneten und den angegebenen Sensorort zwischen Magnet und Zahnstruktur und können so in dieser Hinsicht zu keiner Verbesserung durch erhöhte Feldstärke beitragen.

In der WO97/06404 wird in einem Ausführungsbeispiel (dargestellt in der dortigen Fig.1) die magnetische Achse des Dauermagneten nicht mehr radial, sondern tangential zum Zahnrad positioniert. Der Magnet befindet sich unmittelbar über der Oberfläche des Zahns. Der Sensor ist neben einer Seitenfläche des Magneten und vor der Stirnseite des Zahnrades in Höhe der Zähne angeordnet. Hier wird zwar ein minimaler Abstand zwischen Zahnoberfläche und Magnet verwirklicht, das seitlich aus dem Magneten austretende Feld ist jedoch nicht von hoher Stärke, und nur dieses wirkt auf den Sensor ein. Damit sind hohe Feldstärken auch bei Verwendung von weichmagnetischen Flusskonzentratoren, wie vorgeschlagen, nicht zu verwirklichen. Weitere Ausführungsbeispiele benutzen die Weiterleitung des Magnetfeldes des Dauermagneten über weichmagnetische Teile zum Zahnrad. Das Feld wird so wieder senkrecht in die Zahnoberfläche eingeleitet und zwischen dem weichmagnetischen Teil und dem Zahn befindet sich wieder der Sensor. So kann eine Feldstärkeverstärkung in diesen Ausführungen auch nicht erreicht werden.

Bei einer Anordnung nach WO 2007/002067 wird eine Anordnung zur Abtastung ferromagnetischer Zahnräder angegeben, deren Aufgabe es ist, die Position einer Zahnkante mit möglichst hoher Genauigkeit zu ermitteln. Die Achse des Magneten steht bei der Anordnung, wie im übrigen Stand der Technik üblich, senkrecht zur Zahnoberfläche. Die hohe Auflösung der Zahnkantenposition wird dadurch erreicht, dass der Sensor neben einer Seitenfläche des Magneten nahe der Kante der dem Zahnrad zugewandten Polfläche angeordnet ist und dass die magnetoresistiven Widerstandsstreifen des Sensors auf zwei möglichst kleine Flächen, die in Bewegungsrichtung der Zähne beabstandet sind, aufgeteilt sind. Nur die in der Zahnkantennähe befindlichen Widerstandsstreifen tragen hier etwas zum Sensorsignal bei, was zur Halbierung des Sensorsignals führt. Ein Ziel der Erfindung besteht in der Verwendung von Magneten kleiner Abmessung, da diese die Größe der Anordnung im Wesentlichen bestimmen. Hohe magnetische Feldstärken am Sensorort werden nicht beabsichtigt und auch nicht erreicht.

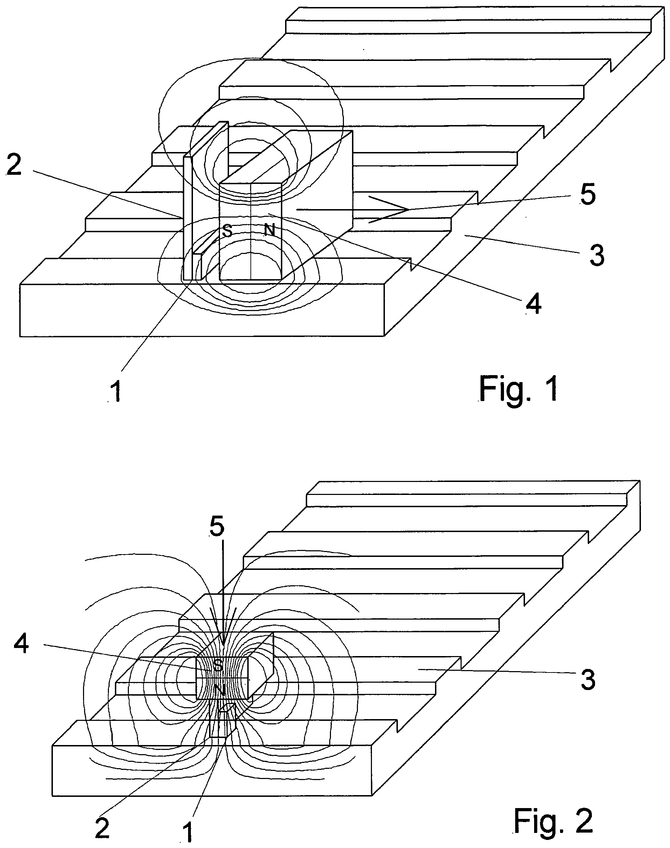

Zum Stand der Technik (US 2004/0095130 A1) gehört auch eine Anordnung zur Abtastung eines im Wesentlichen kreisförmigen Maßstabs aus ferromagnetischem Material mit zahnförmig strukturierter Oberfläche, der aus mindestens einem auf einem Träger angeordnetem Magnetfeldsensor und mindestens einem Dauermagneten besteht, wobei der Maßstab wenigstens eine in Bewegungsrichtung periodische Zahnstruktur aufweist. Der Magnetfeldsensor besteht aus Sensorelementen auf Elementeflächen, die auf einer Sensorfläche des Trägers in Bewegungsrichtung beabstandet sind (Fig. 1 a, Fig. 1 b). In einer Ausführungsform dieser Anordnung soll der Abstand der Mittellinien der Elementeflächen in einem Bereich von 1,5 bis 3 Millimeter auswählbar sein ([0055]), wobei die Periodenlänge, zu der dieser Abstand in Beziehung zu setzen ist, offenbleibt. Weiterhin kann die magnetische Achse, die auf den Polflächen der Dauermagnete senkrecht steht, in bestimmten Stellungen des kreisförmigen Maßstabs zu Kanten der Zahnstruktur parallel verlaufen, nämlich zu den am Rand des kreisförmigen Maßstabs radial orientierten Kanten, da das von den Dauermagneten ausgehende magnetische Feld sich in Richtung auf die Drehachse des kreisförmigen Maßstabs, also ebenfalls radial erstrecken soll ([0038]). Somit ist die magnetische Achse der Dauermagnete nicht parallel zu Kanten der Zahnstruktur an deren Oberfläche bzw. an deren äußerem Rand und senkrecht zur Bewegungsrichtung der Zahnstruktur orientiert. Die Sensorfläche des Trägers ist nicht (am nächsten) über der Zahnstruktur und vor einer Polfläche angeordnet, sondern allenfalls oberhalb der Zahnstruktur und rechtwinklig zu der Polfläche entsprechend deren radial verlaufender magnetischen Achse zwischen den Positionen 2b und 4 (Fig. 1 a). Der Abstand einer oberflächennahen Kante der Sensorfläche zur Oberfläche der Zahnstruktur ist größer als die Abmessung des Luftspaltes zwischen den Polflächen der Oberfläche der Zähne bzw. Zahnstruktur (Fig. 1b). Aus dem deswegen begrenzten Magnetfeld entstand der Wunsch, dieses zu verstärken, um es zu es ermöglichen, auch in magnetisch gestörter Umgebung zuverlässige Positionsergebnisse zu erzeugen.

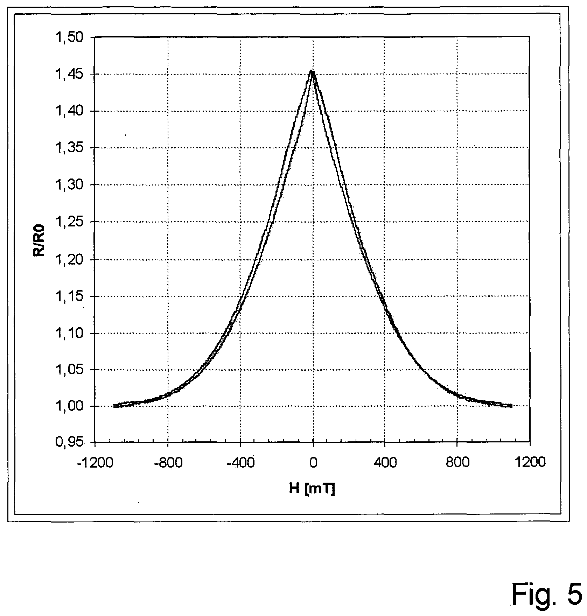

Eine Weiterentwicklung einer Magnetsensoranordnung, die aus der PCT/EP 2005/0501085 bekannt ist, weist zwei Sensorelemente in einer Gradiometeranordnung auf, die jeweils einem von zwei in einem vorgegebenen Abstand angeordneten magnetischen Bereichen eines Spaltpermanentmagneten zugeordnet sind. Die Bereiche und der gesamte Spaltpermanentmagnet sollen hinsichtlich der Abmaße, der Spaltbreite sowie der Spaltform, der Spalttiefe und ihrer Positionen zu den Sensorelementen so ausgebildet sein, dass sich ein Offset des Ausgangssignals der Sensorelemente in der Gradiometeranordnung minimiert. Zu der Magnetsensoranordnung gehört ein passiver Geber, insbesondere ein mit Zähnen versehenes Geberrad aus ferromagnetischem Material. Der Sensor mit zwei magnetoresistiven Sensorelementen ist zwischen den magnetischen Bereichen, d. h. den Polflächen des Spaltpermanentmagneten und dem Geberelement angeordnet (Fig. 5). Damit werden die Sensorelemente nicht am Ort des maximalen Feldes des Spaltpermanentmagneten positioniert.

Aufgabe der vorliegenden Erfindung ist es, eine Anordnung zur Abtastung eines linearen oder kreisförmigen Maßstabes aus ferromagnetischem Material mit zahnförmig strukturierter Oberfläche anzugeben, die die Zahnpositionen mit hoher Genauigkeit in magnetisch gestörter Umgebung ermittelt.

Diese Aufgabe wird mit einer Anordnung entsprechend Anspruch 1 gelöst.

Erfindungsgemäß wird in einer Anordnung der eingangs genannten Gattung die magnetische Achse der Dauermagnete, die rechtwinklig auf den Polflächen der Dauermagnete orientiert ist, parallel zu Kanten der Zahnstruktur an deren dem Magnetsensor bzw. dessen Träger und dem Dauermagneten zugewandten Oberfläche und senkrecht zur Bewegungsrichtung der Zahnstruktur angeordnet. Die Sensorfläche des Trägers ist über der Zahnstruktur und vor mindestens einer Polfläche der Dauermagnete angeordnet. Der Abstand der Mittellinien der Elementeflächen auf der Sensorfläche voneinander sind als Viertel der Periodenlänge der abzutastenden Zahnstruktur oder Vielfache davon dimensioniert. Der Abstand einer oberflächennahen Kante der Sensorfläche zur Oberfläche der Zahnstruktur ist nicht größer als die Abmessung des Luftspaltes zwischen dem Dauermagneten und der Oberfläche der Zähne der Zahnstruktur.

Die Anordnung besteht aus mindestens einem auf einem Träger befindlichen Magnetfeldsensor und mindestens einem Dauermagneten. Ein abzutastender Maßstab weist eine oder mehrere parallele in Bewegungsrichtung periodische Zahnstrukturen auf. Der Maßstab kann beispielsweise linear sein oder die Form eines Zahnrades haben. Die Kanten der Zahnstrukturen bilden bevorzugt mit der Bewegungsrichtung rechte Winkel. Die Dauermagnete sind mit ihrer senkrecht auf den Polflächen stehenden magnetischen Achse parallel zu Kanten der Zahnstruktur und im Abstand eines Luftspaltes zur Oberfläche der Zähne angeordnet. Der Magnetfeldsensor besteht aus Sensorelementen, die sich auf Elementeflächen befinden, die auf einer Sensorfläche des Trägers in Bewegungsrichtung beabstandet sind. Die Sensorfläche des Trägers ist über der Zahnstruktur und vor mindestens einer Polfläche angeordnet, wobei der Abstand einer oberflächennahen Kante der Sensorfläche zur Oberfläche der Zahnstruktur höchstens der Abmessung des Luftspaltes entspricht. Die Abstände der Mittellinien der Elementeflächen voneinander sind durch Viertel der Periodenlänge der abzutastenden Zahnstruktur oder Vielfache davon darstellbar.

In dieser Anordnung befindet sich der Magnetfeldsensor genau an dem Ort, an dem durch den Magneten die höchste Feldstärke der senkrecht auf der Zahnoberfläche. stehenden Feldkomponente erzeugt wird. Dieser Ort befindet sich in der Anordnung in unmittelbarste Nähe zur Zahnstruktur, so dass auch hohe durch die Zahnstruktur hervorgerufene örtliche Feldstärkeänderungen am Sensorort gewährleistet sind. Es kommt hinzu, dass bei der Anordnung die vom Nordpol zum Südpol verlaufenden Feldlinien fast über ihre gesamte Länge durch die weichmagnetische Zahnstruktur geführt werden, womit eine Verstärkung der Feldstärke im Bereich des Spaltes zwischen Magnet und Zahnstrukturoberfläche erreicht wird. Dass dieser Spalt im Bereich des Zahnes eine viel geringere Abmessung hat als im Bereich der Zahnlücke, unterstützt in erheblichem Maße die für die genaue Zahnabtastung nötige Vergrößerung der Differenz der Feldstärken zwischen den genannten Orten.

Die für die Zahnabtastung hier zur Verfügung stehende hohe Magnetfeldstärke sowie deren große Differenzen bei Bewegung der Zahnstruktur, ist eine Grundvoraussetzung für eine genaue Bestimmung der Position der Zahnstruktur, da in technischer Umgebung vorkommende Störfeldstärken gegenüber diesen hohen Feldstärkewerten immer relativ klein bleiben. Es ist dabei auch zu berücksichtigen, dass die Störfelder im Bereich der gerade abgetasteten Zahnperiode nur wenig variierende Werte aufweisen können, so dass der durch sie bewirkte Fehler weit unter ihrem relativen Feldstärkewert liegt.

Es ist klar, dass auch in der erfindungsgemäßen Anordnung die höchsten Feldstärkewerte der Magnete durch Einsatz hochwertiger Dauermagnetwerkstoffe erzielbar sind.

Vorteilhafterweise werden in der Anordnung Magnetfeldsensoren eingesetzt, die auf Magnetfelder reagieren, die senkrecht auf der Oberfläche der Zahnstruktur stehen. Magnetoresistive Sensoren, die sich auf Sensorflächen befinden, die sich parallel zu den Polflächen der Magnete erstrecken, sind dazu bevorzugt geeignet. Dabei kann es sich um AMR-Sensoren oder auch um Spin-Valve-GMR-Senoren handeln. Bei der Untersuchung erfindungsgemäßer Anordnungen stellte sich heraus, dass die erreichbaren Feldstärkewerte (größer als 100 kA/m) auch ausreichen, um Vielschicht-GMR-Sensoren einsetzen zu können. Verfügbare Vielschicht-GMR-Widerstände ändern ihren Widerstand bei magnetischer Einwirkung um mehr als 40%, wodurch Sensoren mit gegenüber anderen magnetoresistiven Sensoren erheblich vergrößerten Sensorausgangssignalen herstellbar sind. Damit sind höhere Auflösungen und Genauigkeiten in der Bestimmung der Position der Zahnstruktur gegeben. Unabhängig von der speziellen Art der magnetoresistiven Sensoren bestehen diese aus Sensorelementen, die sich auf Elementeflächen befinden, die auf einer Sensorfläche des Trägers in Bewegungsrichtung beabstandet sind. Die Abstände der Elementeflächen in Bewegungsrichtung sind an die jeweils abzutastende Zahnstruktur angepasst. Im einfachsten Fall befinden sich zwei gleiche magnetoresistive Widerstände in zwei Elementeflächen, und deren Abstand entspricht der halben Periodenlänge der Zahnstruktur. Die Widerstände sind zu einer Halbbrücke verschaltet. Es können auch in jeder Elementefläche zwei gleiche magnetoresistive Widerstände angeordnet sein, so dass eine Vollbrückenschaltung realisiert werden kann. Die Abtastung der Zahnstruktur mit Hilfe der Halb- oder Vollbrücke ergibt im Wesentlichen eine Sinusfunktion mit der Periodenlänge der Zahnstruktur. Wird in zwei weiteren Elementeflächen, die gegenüber den ersten um ein Viertel der Periodenlänge versetzt angeordnet sind, eine weitere Brücke magnetoresistiver Widerstände untergebracht, kann das zugehörige Kosinussignal erhalten werden. Durch Arcustangensinterpolation kann aus beiden Signalen die Position der Zahnstruktur innerhalb der Periodenlänge hochaufgelöst angegeben werden. Diese Hochauflösung ist vorteilhafter Weise nicht wie bei bekannten Anordnungen nur an den Ort einer steilen Zahnflanke gebunden.

In einer anderen Ausführung der Anordnung, bei der sich beiderseits des Sensors eine gleiche Polfläche (z. B. Nordpol - Nordpol) von zwei Magneten befindet, ist eine Verdoppelung der Magnetfeldstärke am Sensorort möglich.

Zur Abtastung von zwei parallelen Zahnstrukturen können in einer weiteren Ausführung der Erfindung an beiden Polflächen des Magneten Magnetfeldsensoren angeordnet sein.

Der Magnet einer weiteren Ausführung der Erfindung kann in der dem Magnetfeldsensor zugewandten Polfläche in senkrechter Richtung zur Zahnstrukturoberfläche eine Kerbe enthalten. Diese bewirkt eine Homogenisierung des Magnetfeldes in der Umgebung der Kerbe. Damit wird die Justierung des Magnetfeldsensors gegenüber dem Magneten erheblich vereinfacht, die ohne Kerbe wegen Offsetverschiebungen im Sensor erheblichen Aufwand erfordert. Die Kerbe kann soweit vergrößert sein, dass zwei durch ein nichtmagnetisches Material getrennte Magnete mit in einer Ebene liegenden Polflächen vorhanden sind.

Im Folgenden wird die Erfindung an Hand von Ausführungsbeispielen näher erläutert. In den dazu gehörigen Figuren ist Folgendes dargestellt:
- Fig. 1:: Anordnung entsprechend der Erfindung,
- Fig. 2:: Anordnung entsprechend dem Stand der Technik,
- Fig. 3:: Magnet mit maximaler Senkrechtfeld-Komponente,
- Fig. 4:: Verteilung von Elementeflächen des Magnetfeldsensors,
- Fig. 5:: Kennlinie eines Vielschicht-GMR-Widerstandes,
- Fig. 6:: Anordnung mit zwei Magneten,
- Fig. 7:: Anordnung mit zwei Magnetfeldsensoren für zwei parallele Zahnstrukturen,
- Fig. 8:: Anordnung mit gekerbtem Magneten,
- Fig. 9:: Anordnung mit geteiltem Magneten.

Fig. 1 zeigt eine erfindungsgemäße Anordnung zur Abtastung eines linearen oder kreisförmigen Maßstabes 3 aus ferromagnetischem Material mit zahnförmig strukturierter Oberfläche. Über dem Maßstab mit Zahnstruktur befindet sich ein quaderförmiger Magnet 4, dessen links und rechts befindliche Polflächen (S, N) die senkrecht dazu stehende magnetische Achse 5 festlegen. Die Achse 5 ist parallel zu den Kanten der Zahnstruktur gerichtet. Die untere Kante des Magneten 4 ist durch einen Spalt von der Oberfläche eines Zahnes getrennt. In unmittelbarer Nähe der Südpolfläche befindet sich ein Magnetfeldsensor 1, befestigt auf einem Träger 3, dicht über der Zahnstruktur. Der Abstand zwischen der Unterkante des Sensors 1 von der Zahnoberfläche ist in realen Anordnungen geringer als der Spalt zwischen Magnet 4 und Zahnoberfläche. Die aus dem Nordpol N austretenden Feldlinien treten wegen der geringen Breite des Spaltes sofort in das weichmagnetische Material des Maßstabs 3 ein. Der Magnetfeldsensor 1 ist ein magnetoresistiver Sensor. Seine Sensorfläche liegt parallel zur Polfläche S. Gemessen wird durch ihn die senkrechte Feldkomponente. Die in Fig. 1 gezeigte rechteckige Zahnstruktur schließt nicht aus, dass die Anordnung nicht auch für anders geformte Zähne und Zahnlücken geeignet ist. Die gesamte Zeichnung ist nicht maßstäblich und zeigt nur das Prinzip der Anordnung der einzelnen Teile gegeneinander.

Fig. 2 zeigt im Vergleich zu Fig.1 die typische Anordnung von Magnet 4 mit magnetischer Achse 5 und Magnetfeldsensor 1 auf einem Träger 3, entsprechend dem Stand der Technik. Hier werden hohe Feldstärken dadurch nicht erreicht, dass sich der Sensor 1 mit Träger 3 zwischen Magnet und Zahnoberfläche befindet und so einen großen Abstand zwischen beiden bedingt, und dass der Sensor 1 nicht nahe an der Magnetkante positioniert ist, an der die Magnetfeldstärke maximal ist.

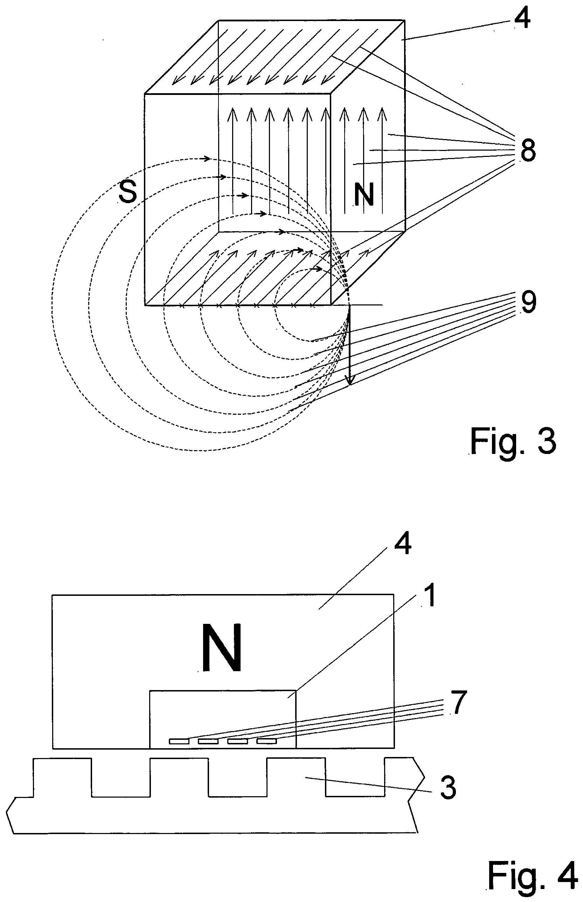

In Fig. 3 wird demonstriert, an welcher Stelle des Magneten 4 die größte Stärke des senkrechten Feldes auftritt. Dazu wird ein Schnitt durch den Magneten gezeigt, dessen Polflächen S bzw. N sich links bzw. rechts in der Zeichnung befinden. Eingezeichnet sind die Oberflächenströme 8 des Magneten, die im Modell als Ursache für das Feld betrachtet werden können. Gezeigt werden weiterhin die Feldlinien 9 dieser Oberflächenströme 8 in der Schnittebene. Vor der unteren Kante der Polfläche N überlagern sich alle Feldlinien 9 und bilden durch Addition die durch den eingezeichneten Pfeil dargestellte große Magnetfeldstärke. Als Ergebnis dieser Betrachtung kann festgestellt werden, dass maximale Feldstärken senkrechter Feldkomponenten nahe der unteren und oberen Kante der Polflächen auftreten müssen. Befindet sich die untere Kante wie in Fig. 1 dicht über dem weichmagnetischen Maßstab, ist mit weiterer Erhöhung der Stärke dieser Feldkomponente zu rechnen.

Die Anordnung der bevorzugt zu benutzenden magnetoresistiven Sensoren ist in Fig. 4 dargestellt. Zu erkennen ist unten die Seitenansicht der Zahnstruktur des Maßstabs 3. Darüber befindet sich die Polfläche N des Magneten 4. Davor befindet sich der Magnetfeldsensor 1 mit vier Elementeflächen 7, die jeweils Sensorelemente enthalten. Die Sensorelemente sind magnetoresistive Dünnschichtstreifen, die beispielsweise in Mäanderform in den Elementeflächen 7 angeordnet sind. Bevorzugt befinden sich auf jeder Elementefläche 7 zwei mäanderförmige Widerstände. Die Elementeflächen 7 sind jeweils um ein Viertel der Periodenlänge der Zahnstruktur des Maßstabs 4 gegeneinander versetzt. Die Widerstände der ersten und der dritten Elementefläche 7 sind zu einer Brücke verschaltet, ebenso die der zweiten und vierten Elementefläche 7. Bei Bewegung des Maßstabs 3 gegenüber dem Magnetfeldsensor 1 gibt die erste Brücke ein sinusförmiges Signal mit der Periodenlänge der Zahnstruktur ab, die zweite Brücke das um 90° Phasen verschobene Kosinussignal. Eine Arcustangensinterpolation dieser Signale liefert die hochaufgelöste Position des Maßstabs.

Mit der erfindungsgemäßen Anordnung werden so hohe Feldstärken am Sensorort erreicht, dass Vielschicht-GMR-Sensoren eingesetzt werden können. Fig. 5 zeigt die Abhängigkeit des Widerstandes R eines solchen Sensors relativ zu seinem Wert bei sehr hohen Feldstärken R₀ von der Feldstärke H. Es wird eine Änderungsamplitude von 45% erreicht. Es sind Felder von einigen hundert Millitesla aufzubringen. Vorteilhaft ist hier das gegenüber AMR-Sensoren deutlich erhöhte Signal, was zur weiteren Verbesserung der Messauflösung beiträgt.

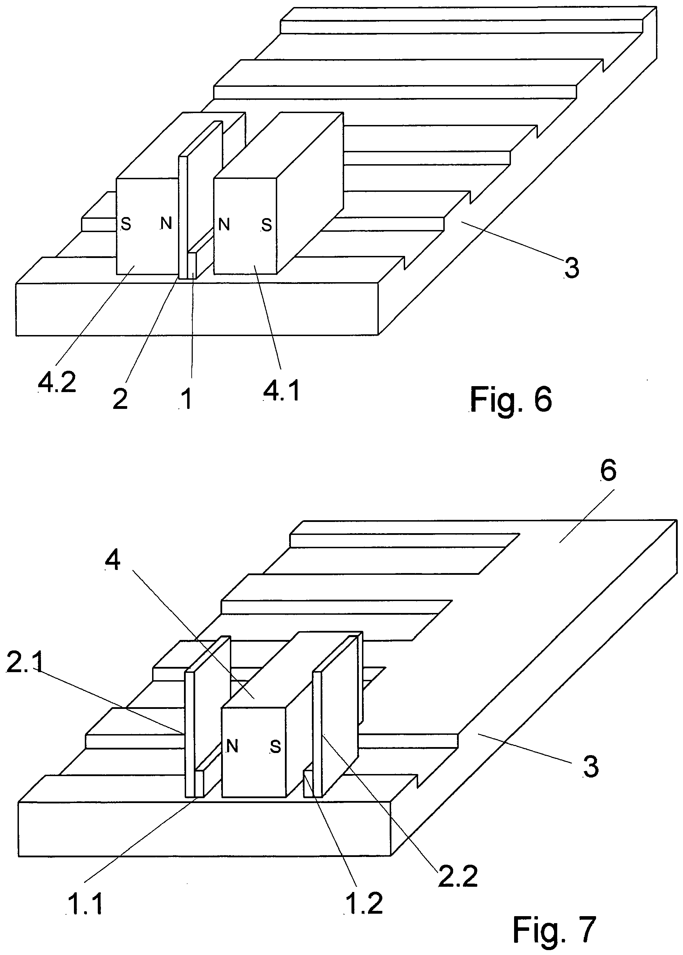

Fig. 6 zeigt eine weitere Möglichkeit der Erhöhung der Feldstärke in erfindungsgemäßen Anordnungen. Auf dem Maßstab 4 befindet sich der Magnetfeldsensor 1 auf seinem Träger 2 zwischen den gleichen Polflächen N eines ersten Magneten 4.1 und eines zweiten Magneten 4.2. Bei geringer Dicke des Trägers 2 kann hier maximal eine Verdopplung der Feldstärke erreicht werden.

In Fig. 7 ist eine Anordnung dargestellt, bei der mit einem Magneten 4 die nötigen Felder für einen ersten Sensor 1.1 und einen zweiten Sensor 1.2 bereitgestellt werden. Die beiden Magnetfeldsensoren 1.1 und 1.2 können zur Abtastung unterschiedlicher Zahnstrukturen des Maßstabs 4 benutzt werden.

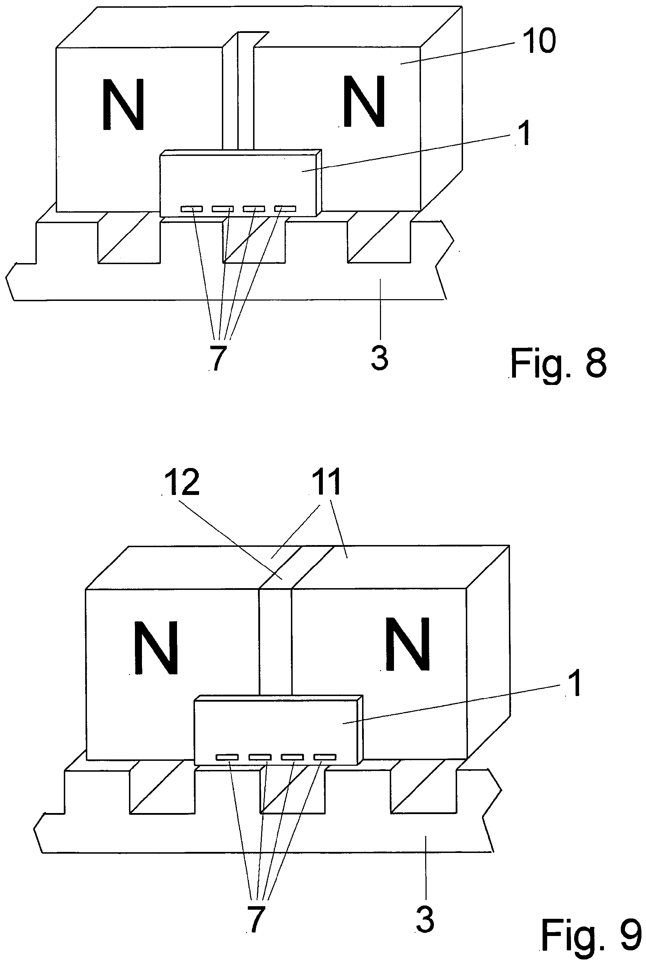

In der Fig. 8 wird gezeigt, wie ein Magnet 10 mit einer eingekerbten Polfläche N bezüglich der Lage der Elementeflächen 7 eines Magnetfeldsensors 1 zu justieren ist, damit ein durch konvergenten Feldaustritt aus einem Magneten 4 bedingter Offsetwert im Ausgangsignal der Sensorbrücken vermieden wird.

Derselbe günstige Einfluss ist durch die in Fig. 9 gezeigte Anordnung mit zwei durch eine nichtmagnetische Zwischenschicht 12 getrennten Teilmagneten 11 mit nebeneinander liegender Polfläche N möglich.

### Liste der Bezugszeichen

- 1: Magnetfeldsensor
- 1.1: erster Magnetfeldsensor
- 1.2: zweiter Magnetfeldsensor
- 2: Träger
- 2.1: erster Träger
- 2.2: zweiter träger
- 3: Maßstab (mit zahnförmig strukturierter Oberfläche)
- 4: Dauermagnet
- 4.1: erster Magnet
- 4.2: zweiter Magnet
- 5: magnetische Achse
- 6: Maßstab mit zwei Zahnstrukturen
- 7: Elementeflächen
- 8: Oberflächenströme
- 9: Magnetfeldlinien
- 10: Magnet mit Kerbe
- 11: Teilmagnet
- 12: nichtmagnetisches Material
- N: Nordpol
- S: Südpol
- H: Feld
- R/R₀: relativer Widerstandswert

## Patentansprüche

1. Anordnung mit einem linearen oder kreisförmigen Maßstab (3) aus ferromagnetischem Material mit zahnförmig strukturierter Oberfläche, umfassend mindestens einen auf einem Träger (2) befindlichen Magnetfeldsensor (1) zur Abtastung des Maßstabs (3) und mindestens einen quaderförmigen Dauermagneten (4),
wobei der Maßstab (3) eine oder mehrere parallele in Bewegungsrichtung periodische Zahnstrukturen aufweist,
wobei der Magnetfeldsensor (1) aus Sensorelementen auf Elementeflächen (7) besteht, die auf einer Sensorfläche des Trägers (2) in Bewegungsrichtung beabstandet sind,
wobei die Dauermagnete (4) im Abstand eines Luftspaltes zur Oberfläche der Zähne der Zahnstruktur angeordnet sind,
**dadurch gekennzeichnet,**
**dass** die magnetische Achse der Dauermagnete, die rechtwinklig auf den Polflächen der Dauermagnete angeordnet ist, parallel zu Kanten der Zahnstruktur an deren dem Magnetfeldsensor und dem Dauermagneten zugewandten Oberfläche und senkrecht zur Bewegungsrichtung der Zahnstruktur angeordnet ist,
**dass** die Sensorfläche des Trägers (2) über der Zahnstruktur und vor mindestens einer Polfläche (N; S) angeordnet ist,
**dass** die Abstände der Mittellinien der Elementeflächen voneinander durch Viertel der Periodenlänge der abzutastenden Zahnstruktur oder Vielfache davon darstellbar sind, und
**dass** der Abstand einer oberflächennahen Kante der Sensorfläche zur Oberfläche der Zahnstruktur nicht größer als die Abmessung des Luftspaltes ist.

2. Anordnung nach Anspruch 1, **dadurch gekennzeichnet, dass** sich die Sensorfläche parallel zu den senkrecht zur magnetischen Achse (5) ausgedehnten Polflächen (N; S) erstreckt.

3. Anordnung nach Anspruch 2, **dadurch gekennzeichnet, dass** in den Elementeflächen (7) magnetoresistive Schichtstreifenwiderstände angeordnet sind.

4. Anordnung nach Anspruch 3, **dadurch gekennzeichnet, dass** vier Schichtstreifenwiderstände zu mindestens einer Wheatstone-Brücke verschaltet sind.

5. Anordnung nach Anspruch 4, **dadurch gekennzeichnet, dass** je vier Schichtstreifenwiderstände zu zwei Wheatstone-Brücken verschaltet sind, und die Schichtstreifenwiderstände der beiden Brücken in Bewegungsrichtung so gegeneinander versetzt sind, dass die Ausgangssignale der Brücken um ein Viertel der Zahnperiodenlänge gegeneinander phasenversetzt sind.

6. Anordnung nach Anspruch 3, **dadurch gekennzeichnet, dass** die Schichtstreifenwiderstände den AMR-Effekt zeigen.

7. Anordnung nach Anspruch 3, **dadurch gekennzeichnet, dass** die Schichtstreifenwiderstände den GMR-Effekt zeigen.

8. Anordnung nach Anspruch 7, **dadurch gekennzeichnet, dass** die Schichtstreifenwiderstände durch Vielschicht-GMR-Systeme gebildet sind.

9. Anordnung nach Anspruch 1, **dadurch gekennzeichnet, dass** der Magnetfeldsensor (1) zwischen zwei sich mit gleicher Polfläche (N; S) gegenüberstehenden Magneten (4) angeordnet ist.

10. Anordnung nach Anspruch 1, **dadurch gekennzeichnet, dass** je ein Magnetfeldsensor (1) vor beiden Polflächen (N, S) eines Magneten angeordnet ist und jeder Sensor (1) eine der parallelen periodischen Zahnstrukturen abtastet.

11. Anordnung nach Anspruch 1, **dadurch gekennzeichnet, dass** die Abmessung des Magneten (4) in Bewegungsrichtung größer als die Periodenlänge der Zahnstruktur ist und die Elementeflächen (7) um die Mittellinie des Magneten in Bewegungsrichtung symmetrisch verteilt sind.

12. Anordnung nach Anspruch 11, **dadurch gekennzeichnet, dass** der Magnet (4) in der der Zahnoberfläche zugewandten Fläche an der Mittellinie in Bewegungsrichtung eingekerbt ist.

13. Anordnung nach Anspruch 12, **dadurch gekennzeichnet, dass** die Kerbtiefe mit der Abmessung des Magneten (4) vergleichbar ist.

14. Anordnung nach Anspruch 13, **dadurch gekennzeichnet, dass** die Kerbe mit nichtmagnetischem Material (12) gefüllt ist.

## Claims

1. Arrangement having a linear or circular measuring rod (3) made of ferromagnetic material with a surface structured in a tooth-shaped manner, comprising, on a support (2), at least one magnetic field sensor (1) for scanning the measuring rod (3) and at least one cuboid-shaped permanent magnet (4),
wherein the measuring rod (3) has one or a plurality of parallel tooth structures which are periodic in the direction of movement, wherein the magnetic field sensor (1) consists of sensor elements on element surfaces (7), which are spaced apart in the direction of movement on a sensor surface of the support (2),
wherein the permanent magnets (4) are arranged at the distance of an air gap to the surface of the teeth of the tooth structure,
**characterised in that**
the magnetic axis of the permanent magnets, which is arranged perpendicular on the pole surfaces of the permanent magnets, is arranged parallel to edges of the tooth structure on the surface thereof facing the magnetic field sensor and the permanent magnet, and perpendicular to the direction of movement of the tooth structure,
the sensor surface of the support (2) is arranged across the tooth structure and in front of at least one pole surface (N; S), such that the distances of the centre lines of the element surfaces from one another can be represented by a quarter of the period length of the tooth structure to be scanned or multiples thereof, and that
the distance of a near-surface edge of the sensor surface to the surface of the tooth structure is not greater than the dimension of the air gap.

2. Arrangement according to claim 1, **characterised in that** the sensor surface extends parallel to the pole surfaces (N; S) extending perpendicular to the magnetic axis (5).

3. Arrangement according to claim 2, **characterised in that** magnetoresistive laminated strip resistors are arranged on the element surfaces (7).

4. Arrangement according to claim 3, **characterised in that** four laminated strip resistors are interconnected with at least one Wheatstone bridge.

5. Arrangement according to claim 4, **characterised in that** every four laminated strip resistors are interconnected with two Wheatstone bridges, and the laminated strip resistors of the two bridges are offset against one another in the direction of movement, such that the output signals of the bridges are phase-shifted against one another by a quarter of the tooth period length.

6. Arrangement according to claim 3, **characterised in that** the laminated strip resistors demonstrate the AMR effect.

7. Arrangement according to claim 3, **characterised in that** the laminated strip resistors demonstrate the GMR effect.

8. Arrangement according to claim 7, **characterised in that** the laminated strip resistors are formed by multilayer GMR systems.

9. Arrangement according to claim 1, **characterised in that** the magnetic field sensor (1) is arranged between two opposing magnets (4) with the same pole surface (N; S).

10. Arrangement according to claim 1, **characterised in that** a magnetic field sensor (1) is arranged in front of each of the two pole surfaces (N, S) of a magnet, and each sensor (1) scans one of the parallel periodic tooth structures.

11. Arrangement according to claim 1, **characterised in that** the dimension of the magnet (4) in the direction of movement is greater than the period length of the tooth structure, and the element surfaces (7) are distributed symmetrically about the central line of the magnet in the direction of movement.

12. Arrangement according to claim 11, **characterised in that** the magnet (4) is notched in the surface facing the tooth surface on the central line in the direction of movement.

13. Arrangement according to claim 12, **characterised in that** the notch depth is comparable with the dimension of the magnet (4).

14. Arrangement according to claim 13, **characterised in that** the notch is filled with non-magnetic material (12).

## Revendications

1. Disposition avec une échelle (3) linéaire ou circulaire à base d'un matériau ferromagnétique avec une surface structurée en forme de dents, comprenant au moins un détecteur de champ magnétique (1) se trouvant sur un support (2) pour le balayage de l'échelle (3), et au moins un aimant permanent (4) en forme de parallélépipède,
l'échelle (3) présentant une ou plusieurs structures dentelées parallèles périodiques dans la direction de déplacement,
le détecteur de champ magnétique (1) étant constitué d'éléments de détecteurs sur des surfaces d'éléments (7), qui sont espacés sur une surface de détecteur du support (2) dans la direction de déplacement,
les aimants permanents (4) étant disposés à la distance d'un entrefer par rapport à la surface des dents de la structure dentelée,
**caractérisé en ce**
**que** l'axe magnétique des aimants permanents qui est disposé à angle droit sur les surfaces des pôles des aimants permanents, est disposé de manière parallèle par rapport à des arêtes de la structure dentelée à la surface de celles-ci orientée vers le détecteur de champ magnétique et l'aimant permanent et de manière perpendiculaire par rapport à la direction de déplacement de la structure dentelée,
**que** la surface de détecteur du support (2) est disposée au-dessus de la structure dentelée et devant au moins une surface de pôle (N ; S),
**que** les distances entre des lignes médianes des surfaces des éléments peuvent être représentées par des quarts de la longueur des périodes de la structure dentelée à balayer ou des multiples de celle-ci, et
**que** la distance d'une arête proche de la surface de la surface de détecteur n'est pas supérieure à la dimension de l'entrefer.

2. Disposition selon la revendication 1, **caractérisé en ce que** la surface de détecteur s'étend parallèlement par rapport aux surfaces des pôles (N ; S) étirées perpendiculairement par rapport à l'axe magnétique (5).

3. Disposition selon la revendication 2, **caractérisé en ce que** dans les surfaces d'éléments (7) sont disposées des résistances sous forme de bandes de couches magnéto-résistives.

4. Disposition selon la revendication 3, **caractérisé en ce que** quatre résistances sous forme de bandes de couches magnéto-résistives sont interconnectées pour former au moins un pont de Wheatstone.

5. Disposition selon la revendication 4, **caractérisé en ce que** quatre résistances en forme de bandes de couches respectives sont interconnectées pour former deux ponts de Wheatstone, et les résistances en forme de bandes de couches des deux ponts dans la direction de déplacement sont décalées les unes par rapport aux autres, de sorte que les signaux de sortie des ponts sont décalés en phase les uns par rapport aux autres d'un quart de la longueur de la période des dents.

6. Disposition selon la revendication 3, **caractérisé en ce que** les résistances en forme de bandes de couches présentent l'effet de magnétorésistance anisotrope (AMR).

7. Disposition selon la revendication 3, **caractérisé en ce que** les résistances en forme de bandes de couches présentent l'effet de magnétorésistance géante (GMR).

8. Disposition selon la revendication 7, **caractérisé en ce que** les résistances en forme de bandes de couches sont formées par des systèmes GMR en multicouches.

9. Disposition selon la revendication 1, **caractérisé en ce que** le détecteur de champ magnétique (1) est disposé entre deux aimants (4) se faisant face avec la même surface de pôle (N ; S).

10. Disposition selon la revendication 1, **caractérisé en ce qu'**un détecteur de champ magnétique (1) respectif est disposé devant les deux surfaces de pôles (N, S) d'un aimant et chaque détecteur (1) balaye l'une des structures dentelées périodiques parallèles.

11. Disposition selon la revendication 1, **caractérisé en ce que** la dimension de l'aimant (4) dans la direction de déplacement est supérieure à la longueur de période de la structure dentelée et que les surfaces d'éléments (7) sont distribuées de manière symétrique autour de la ligne médiane de l'aimant dans la direction de déplacement.

12. Disposition selon la revendication 11, **caractérisé en ce que** l'aimant (4) est entaillé au niveau de la ligne médiane dans la direction de déplacement dans la surface orientée vers la surface de la dent.

13. Disposition selon la revendication 12, **caractérisé en ce que** la profondeur d'entaille est comparable à la dimension de l'aimant (4).

14. Disposition selon la revendication 13, **caractérisé en ce que** l'entaille est remplie avec un matériau non magnétique (12).
